# EUROPÄISCHE PATENTSCHRIFT

(11) **EP 0 290 587 B1**
(45) Veröffentlichungstag und Bekanntmachung des Hinweises auf die Patenterteilung: **03.03.1993**
(21) Anmeldenummer: 88900067.5
(22) Anmeldetag: 10.12.1987
(51) Int. Cl.: B60T 1/06, B60G 3/00, B60G 11/26, B60G 15/12

(54) **Einzelradaufhängung für ein Kraftfahrzeug, insbesondere einen Omnibus**
Independent vehicle wheel suspension, especially suitable for a bus
Suspension indépendante pour un véhicule, particulièrement pour un autobus

(30) Priorität: 10.12.1986 DE 3642146; 09.10.1987 DE 3734212
(43) Veröffentlichungstag der Anmeldung: 17.11.1988
(73) Patentinhaber: ZF FRIEDRICHSHAFEN Aktiengesellschaft, 88038 Friedrichshafen (DE)
(72) Erfinder: RIESE, Wolfgang, CH-8634 Hombrechtikon (CH)
(86) Internationale Anmeldenummer: DE8700587
(87) Internationale Veröffentlichungsnummer: WO8804249

(56) Entgegenhaltungen:
- EP-A- 0 245 220
- WO-A-81/02999
- DE-A- 2 332 387
- FR-A- 1 075 167
- FR-A- 2 398 628
- GB-A- 367 995
- Patent Abstracts of Japan, Band 8, Nr. 54 (M-282)(1491) 10. März 1984

## Beschreibung

Die Erfindung bezieht sich auf eine Einzelradaufhängung für ein Kraftfahrzeug, insbesondere einen Omnibus, bei der ein Fahrzeugrad an einem Radträger höhenbeweglich und gegebenenfalls lenkbar in der Weise aufgehängt ist, daß der Radträger über einen Querlenker, ein Federbein, bestehend aus einem Federbeinfünrungsrohr und einer Federbeinkolbenstange, und einen separat angeordneten Stoßdämpfer mit dem Fahrzeugrahmen verbunden ist.

Bei Nutzkraftfahrzeugen ist die Verwendung starrer Achsen allgemein üblich. Insbesondere bei Personenkraftwagen sind Einzelradaufhängungen verbreitet, bei denen die Fahrzeugräder beispielsweise über Doppeldreiecklenker oder Federbeine in Verbindung mit Querlenkern mit dem Fahrzeugrahmen verbunden sind. Radaufhängungen unter Verwendung von Doppeldreiecklenkern sind relativ aufwendig und benötigen einen erheblichen Einbauraum. Derartige Lenkerführungen sind aus Platzgründen bei Omnibussen nicht zu verwenden. Hier werden an die Raumgestaltung besondere Anforderungen gestellt: Die Abmessungen der Radkästen sollen klein sein, damit ein durchgehend breiter Laufgang vorgesehen werden kann. Die Flurhöhe, d. h. der Boden des Laufgangs, soll niedrig liegen, damit der Einstieg erleichtert wird. Fahrwerkstechnische Verbindungen zwischen den Rädern (Spurstange, Achsbrücke, Ausgleichs- und Schaltgetriebe) erschweren eine tiefliegende Anordnung des Laufgangs.

Aus der FR-A-2 398 628 ist eine Einzelradaufhängung unter Verwendung eines Federbeins und eines Querlenkers bekannt geworden. Das Federbein ist an seinem oben liegenden Ende mit einem Stoßdämpfer verbunden, der über einen Kugelkopf im Fahrgestell dreh- und schwenkbeweglich gelagert ist. Durch die exzentrische Lagerung des Federbeins und des Stoßdämpfers und durch eine Endlagendämpfung über elastische Anschläge, eignet sich die vorbekannte Einzelradaufhängung für schwere Fahrzeuge, wie z. B. Omnibusse, nicht.

Der Erfindung liegt die Aufgabe zugrunde, eine Einzelradaufhängung für ein gelenktes bzw. ungelenktes Fahrzeugrad zu schaffen, die insbesondere bei schweren Fahrzeugen eingesetzt werden kann. Diese Einzelradaufhängung soll ferner den besonderen Anforderungen bei Omnibussen gerecht werden.

Die der Erfindung zugrunde liegende Aufgabe wird dadurch gelöst, daß mit dem Federbeinführungsrohr des Federbeins ein unterer Träger für Luftfedern verbunden ist, wobei die Luftfedern - gesehen quer zur Fahrtrichtung - beidseits vom Federbein angeordnet sind und sich an ihren oberen Enden am Radkastengehäuse oder an einem oberen Träger, der mit der Federbeinkolbenstange des Federbeins und gegebenenfalls mit dem oberen Ende des Stoßdämpfers verbunden ist, abstützen. Mit der erfindungsgemäßen Konstruktion ist eine Einzelradaufhängung für ein gelenktes bzw. ungelenktes Fahrzeugrad geschaffen worden, die insbesondere bei schweren Fahrzeugen eingesetzt werden kann. Durch die Lagerung der Einzelradaufhängung können große Kräfte in den Fahrzeugrahmen eingeleitet werden. Die Einzelradaufhängung bildet eine Baueinheit, die wenig Bauraum in Anspruch nimmt. Dadurch können die Abmessungen der Radkästen klein gehalten werden. Da eine fahrwerkstechnische Verbindung zwischen den Rädern einer Achse fehlt bzw. auf den Antriebswellenstrang beschränkt bleibt, kann bei Omnibussen zwischen den Radkästen ein breiter und tiefliegender Laufgang untergebracht werden.

Es ist vorteilhaft, mit dem Radträger zumindest einen Stoßdämpfer zu verbinden, welcher andererseits am Radkastengehäuse oder am oberen Träger angelenkt ist.

Um einen zusätzlichen Stoßdämpfer anzubringen, kann der Radträger in vorteilhafter Weise zwei Anlenkstellen zum Befestigen von Stoßdämpfern aufweisen.

Durch die Schrägstellung des Federbeins entsteht normalerweise eine relativ hohe Reibung zwischen der Federbeinkolbenstange und dem Federbeinführungsrohr. Um diese Reibung zu minimieren, ist es vorteilhaft, daß, gesehen in Fahrzeuglängsrichtung, die Längsachse des Stoßdämpfers mit der Längsachse des Federbeins einen Winkel einschließt.

Bei einer vorteilhaften Ausgestaltung der Einzelradaufhängung ist der obere Träger in einem Federbeinlager abgestützt. Dieses Lager kann beispielsweise ein Kegellager sein. Hierdurch ist es möglich, auch die Fahrzeugräder einer Mittelachse lenkbar auszubilden, wobei die am jeweiligen Schwenklager befestigte Spurstange als Lenkstange dient.

Bei einem weiteren Ausführungsbeispiel einer erfindungsgemäßen Einzelradaufhängung weist jede Luftfeder einen Federbalg auf, welcher zwischen dem unteren Träger, einem Luftfederkolben und dem Radkastengehäuse angeordnet ist. Eine derartige Einzelradaufhängung ist demnach feststehend ausgebildet, so daß die Luftfedern und Stoßdämpfer mit dem Radkastengehäuse verbunden sind.

Eine vorteilhafte Möglichkeit zur Anlenkung der Stoßdämpfer besteht darin, daß am Radträger beidseits eines Achszapfens Befestigungsaugen angegossen oder angeschmiedet sind, an welchen sich zwei Stoßdämpfer abstützen. Diese sind am anderen Ende mit dem oberen Träger verbunden.

Ein Radträger, der sowohl für den linksachsigen wie auch für den rechtsachsigen Einbau geeignet ist, ist nach einem weiteren vorteilhaften Merkmal derart geformt, daß er zu einer Achse in Bezug auf die Anlenkung der Stoßdämpfer und eine Spurstange spiegelsymmetrisch ausgebildet ist. In diesem Fall muß der Radträger lediglich um seine Achse gedreht werden, um einen Nachlauf zu erzielen. Es ist ferner vorteilhaft, wenn der Radträger als einstückiges Guß- oder Schmiedeteil gefertigt ist.

Um die Dämpfung vorteilhaft zu beeinflussen, wird nach einem weiteren vorteilhaften Merkmal vorgeschlagen, die Längsachse des Stoßdämpfers gegenüber der Längsachse des Federbeins in Richtung zur Bereifung hin versetzt anzuordnen.

Weitere Vorteile, Merkmale und Einzelheiten der Erfindung ergeben sich aus der nachfolgenden Beschreibung bevorzugter Ausführungsbeispiele anhand der Zeichnungen.

Es zeigen:
- Fig. 1: eine teilweise geschnittene Ansicht einer ersten Einzelradaufhängung im Bereich eines Radkastens gesehen in Fahrtrichtung;
- Fig. 2: eine teilweise geschnittene Seitenansicht der Einzelradaufhängung nach Fig. 1;
- Fig. 3: eine weitere Ausführungsform einer Einzelradauf hängung, und zwar deren oben liegenden Bereich, gesehen in teilweise geschnittener Seitenansicht;
- Fig. 4: eine Ansicht der Einzelradaufhängung eines lenkbaren Fahrzeugrades, gesehen in Fahrtrichtung ;
- Fig. 5: eine Seitenansicht eines weiteren Ausführungsbeispiels einer Einzelradaufhängung ergänzt um weitere Bauteile wie einer Bremsanlage;
- Fig. 6: einen Schnitt entlang Linie VI-VI in Fig. 5 und

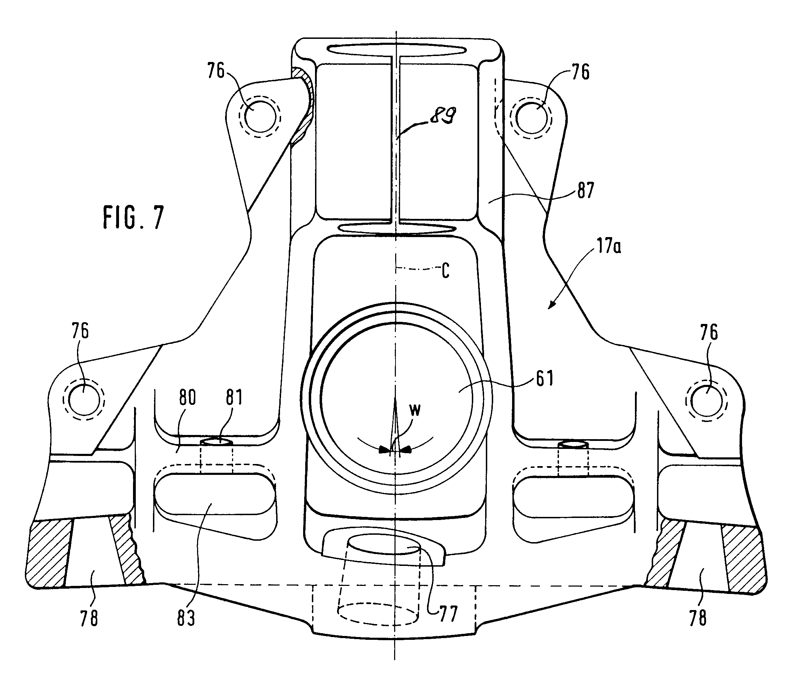

- Fig. 7: einen einzelnen Radträger in Seitenansicht.

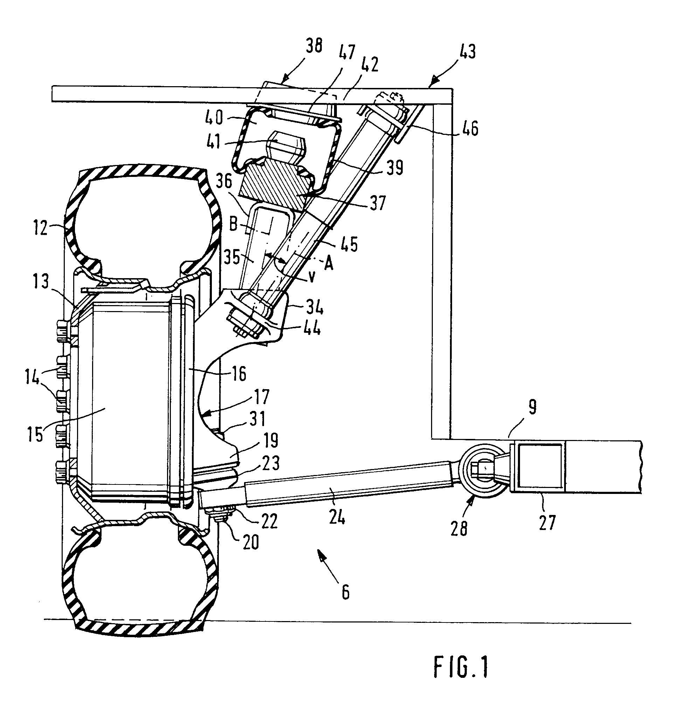

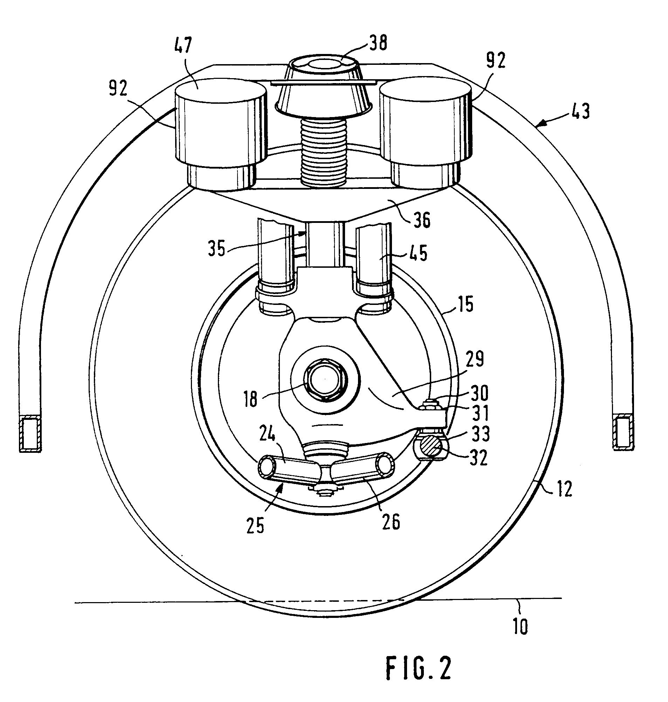

In Fig. 1 ist ein Teil einer Achse 6 und einer Bodenplatte 9 eines Kraftfahrzeuges dargestellt. Hierbei handelt es sich um eine Einzelradaufhängung. Die entsprechende Bereifung 12 wird von einer Felge 13 gehalten, welche über Schrauben 14 mit einer Bremsetrommel 15 verbunden ist. Die Bremstrommel 15 ist einer statischen Ankerplatte 16 aufgeschoben. Die Ankerplatte 16 ist mit einem Radträger 17 fest verbunden. Im Radträger 17 läuft eine in Fig. 2 dargestellte Radnabe 18.

Der Radträger 17 weist drei Schenkel auf. Ein unterer Schenkel 19 wird von einem Drehzapfen 20 durchsetzt, auf den eine Mutter 22 aufgeschraubt ist. Am unteren Schenkel 19 ist ein Kugelgelenk 23 angelenkt, welches in der gezeigten Ausführungsform von einer Gummimanschette umgeben ist. Zwischen dem Kugelgelenk 23 und der Mutter 22 kragen zwei Streben 24 und 26 eines Dreiecklenkers 25 (siehe Fig. 2) ab. Die Streben 24 und 26 des Dreiecklenkers 25 bilden mit einem an der Bodenplatte 9 festgelegten Bodenträger 27 je ein Gelenk 28.

Auch den in Fig. 2 gezeigten mittleren Schenkel 29 durchsetzt ein Drehzapfen 30, der durch eine Mutter 31 befestigt wird. Dieser Drehzapfen 30 ist mit einer Spurstange 32 verbunden, wobei auch hier ein Drehgelenk von einer Manschette 33 umgeben ist.

Mit einem oberen Schenkel 34 des Radträgers 17 ist ein Federbein 35 verbunden. Auf einem Träger 36 sitzt zumindest ein Luftfederkolben 37 auf (Fig. 1).

Zwischen dem Luftfederkolben 37 und einem Federbeinlager 38 wird durch einen Luftfederbalg 39 ein luftdichter Raum 40 abgeschlossen, in welchem dem Luftfederkolben 37 ein Dämpfungsglied 41 aufgesetzt ist.

Das Federbeinlager 38 ist über entsprechende Verbindungsplatten 42 am Radkastengehäuse 43 festgelegt.

Beidseits des oberen Schenkels 34 kragen von diesem Flügel 44 ab, an denen Stoßdämpfer 45 befestigt sind. Andererseits ist jeder Stoßdämpfer 45 über einen Befestigungsrahmen 46 mit dem Radkastengehäuse 43 verbunden. Die Längsachse A des Stoßdämpfers 45 bildet zur Längsachse B des Federbeins 35 einen Winkel v, dessen Aufgabe weiter unten beschrieben wird.

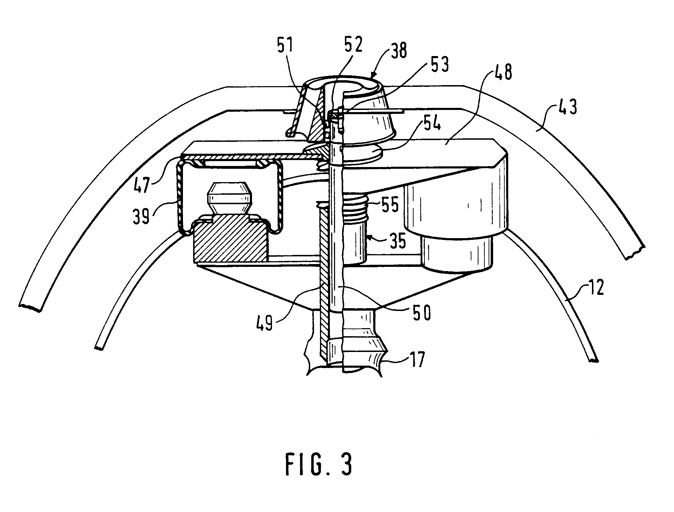

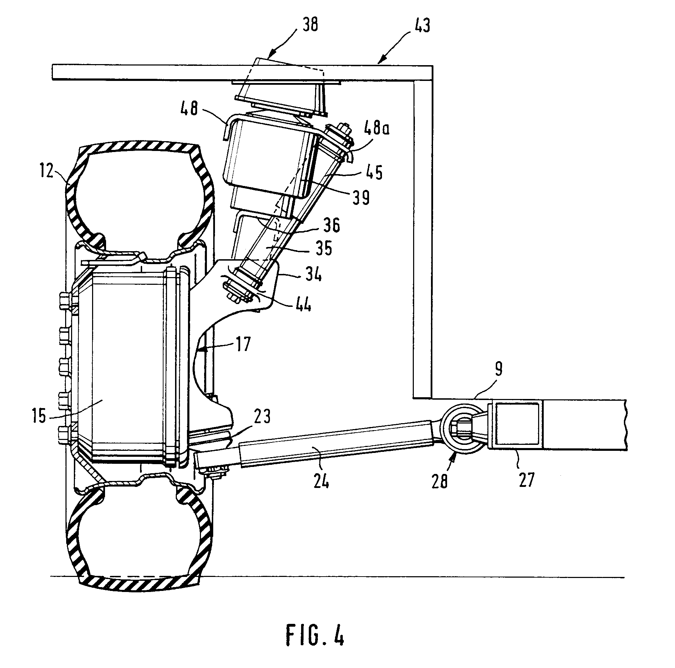

In Fig. 2 ist gezeigt, daß beidseits des Federbeins 35 je ein Luftfederbalg 39 vorgesehen ist, der sich einerseits auf dem unteren Träger 36 und andererseits über eine Anschlagplatte 47 gegen das Radkastengehäuse 43 abstützt. Diese Abstützung ist in Fig. 3 dadurch verändert, daß die Federbälge 39 bzw. deren Anschlagplatten 47 von einem oberen Träger 48 getragen werden, welcher unterhalb des Federbeinlagers 38 mit dem Federbein 35 verbunden ist. Bei der drehbaren Einzelaufhängung gemäß Fig. 4 stützt sich gegen den oberen Träger 48 bzw. einen abgekröpften Teil 48a hiervon der Stoßdämpfer 45 ab.

Das Federbein 35 besteht aus einem Federbeinführungsrohr 49, welches am Radträger 17 befestigt ist. In dem Federbeinführungsrohr 49 gleitet eine Federbeinkolbenstange 50, welche den oberen Träger 48 durchsetzt und in das Federbeinlager 38 eingreift. Hier ist neben einem inneren Federbeinlager 51 ein Kegellager 52 vorgesehen.

Ebenfalls sind entsprechende Befestigungsmittel 53 für die Federbeinkolbenstange 50 angedeutet.

Im Bereich zwischen dem Federbeinlager 38 sowie dem oberen Träger 48 und unterhalb des oberen Trägers 48 übernehmen Gummimanschetten 54 und 55 die Abdichtung des Federbeinführungsrohrs 49 zur Federbeinkolbenstange 50. Es ist auch denkbar, daß statt der Gummimanschette 55 ein zusätzlicher Luftfederbalg angeordnet ist, der die Abdichtung zwischen dem Federbeinführungsrohr und der Federbeinkolbenstange übernimmt und gleichzeitig durch Druckluftbeaufschlagung mitträgt.

Der Winkel v (vgl. Fig. 1) zwischen der Längsachse A der Stoßdämpfer und der Längsachse B des Federbeins 35 hat die Wirkung, daß ein Teil der Stoßdämpferkraft zur Entlastung der auftretenden Reibung zwischen dem Federführungsrohr 49 und der Federbeinkolbenstange 50 führt. Damit wird ein weicheres Ansprechen der Federung erreicht.

Da in einem bevorzugten Ausführungsbeispiel das gesamte Federbein 35 zusammen mit den mit ihm verbunden Luftfederbälgen 39 und den mit dem oberen Träger 48 verbundenen Stoßdämpfern 45 im Kegellager 52 drehbar angeordnet sein soll, muß die Federbeinkolbenstange 49 so zwangsgeführt sein, daß eine relative Drehbewegung beider Elemente zueinander möglich ist. Dies kann beispielsweise durch eine nicht näher dargestellte Verzahnung erfolgen, wobei das Federbeinführungsrohr 49 eine entlang seiner Längsachse verlaufende Innenverzahnung und die Federbeinkolbenstange 50 eine entsprechende Außenzahnung besitzt.

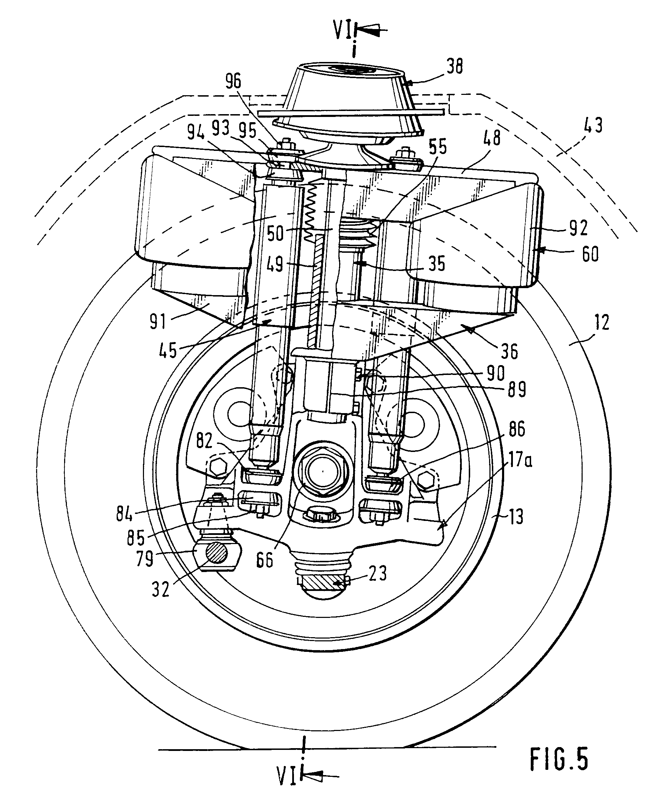

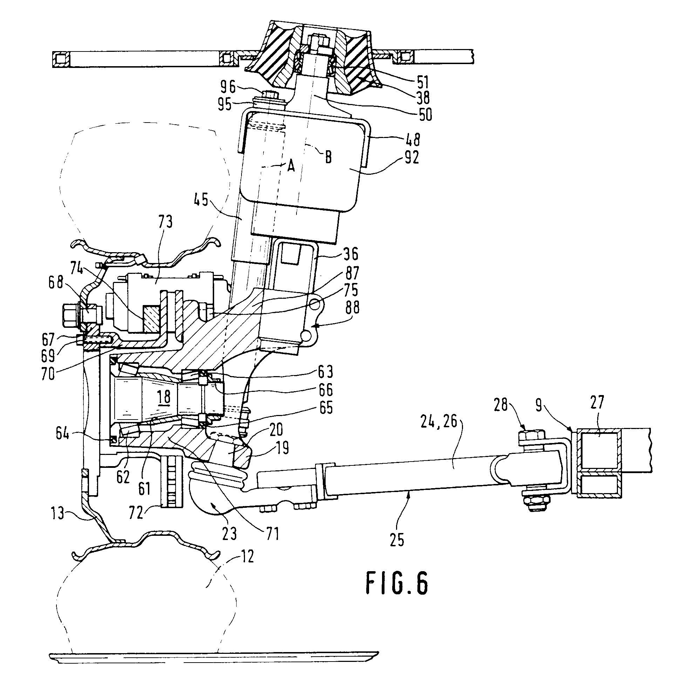

Gemäß Fig. 5 ist eine Federung 60 über ein Federbeinlager 38 mit einem Radkastengehäuse 43 verbunden. Andererseits bestehen Verbindungen zwischen Federung 60 und einem Radträger 17a, an welchem die Spurstange 32 sowie das Gelenk 23 für die Dreieckslenker 24, 26 festgelegt ist. Ferner befinden sich an diesem Radträger 17 a noch Teile einer Bremsanlage (siehe Fig. 6), an welcher wiederum eine Felge 13 für eine Bereifung 12 festgelegt ist.

Der Radträger 17a weist eine Stufenbohrung 61 auf, welche den drehenden Achszapfen 18 aufnimmt. Dieser stützt sich über Lager 62 und 63 ab. Nach außen hin ist die Stufenbohrung 61 über Dichtungen 64 und 65 abgedichtet.

An den Achszapfen 18 schließt ein Flanschträger 67 an, an welchem die Felge 13 über Schraubenbolzen 68 festgelegt ist. Durch weitere Schraubenbolzen 69 ist der Flanschträger 67 mit einem Bremsscheibenträger 70 verbunden. Eine Bremsscheibe 72 ist von Bremszangenträgern 73 mit Bremsklötzen 74 umgeben.

Der Radträger 17a weist eine Symmetrieachse C auf. Mit Ausnahme einer Bohrung 77 für das Gelenk 23 sind die Teile des Radträgers 17 a links und rechts von der Symmetrieachse C spiegelbildlich ausgebildet. Dies gilt vor allem für die Konusbohrungen 78, welche der Festlegung des Spurstangengelenkes 79 dienen. Gleiches gilt auch für einen Brückenstreifen 80, welcher von einem Befestigungsauge 81 durchsetzt ist, das in Gebrauchslage von einem Befestigungsbolzen 82 des Stoßdämpfers 45 durchgriffen ist. Unterhalb dieses Brückenstreifens 80 ist dem Radträger 17a eine Öffnung 83 eingeformt, welche der Aufnahme eines elastischen Puffers 84 sowie einer Mutter 85 zum Festlegen des Befestigungsbolzens 82 dient. Auf dem Brückenstreifen 80 stützt sich der Stoßdämpfer 45 gegen einen elastischen Puffer 86 ab.

Die spiegelsymmetrische Anordnung dieses Radträgers 17a bzw. der einzelnen Befestigungspositionen hat den Vorteil, daß der Radträger 17a sowohl linksachsig wie auch rechtsachsig verwendbar ist. Deshalb kann mit Ausnahme der Bohrung 77 der Radträger 17a in Serie gefertigt werden. Diese Bohrung 77 für das Gelenk 23 muß eine vorbestimmte Neigung in einem Winkel w zur Symmetrieachse C aufweisen. Deshalb wird sie nachträglich eingeformt, je nachdem, ob das Schwenklager 17a links- oder rechtsachsig Anwendung finden soll.

Zur Festlegung des Federbeinführungsrohres 49 weist ein Auge 88 einen Schlitz 89 auf, der von zwei Klemmschrauben durchquert wird.

Gegen das Auge 88 bzw. das Halsteil 87 stützt sich der untere Träger 36 ab, welcher das Federbeinführungsrohr 49 umgibt. Auf Tragarmen 91 sind Luftfedern 92 aufgesetzt, welche sich gegen einen oberen Träger 48 abstützen. Dieser obere Träger 48 umgibt U-förmig das Federbein 35 und dient gleichzeitig als oberer Anlenkpunkt für die Stoßdampfer 45. Dabei durchsetzen die Stoßdämpfer 45 wiederum mit einem Befestigungsbolzen 93 den oberen Träger 48, wobei sie beidseits über elastische Puffer 94 und 95 gelagert sind.

Eine Mutter 96 hält den Befestigungsbolzen 93. Dabei verläuft die Achse A des Stoßdämpfers 35 in etwa parallel zur Achse B des Federbeins 35.

In dem Federbeinführungsrohr 49 wird eine Federbeinkolbenstange 50 geführt, wobei zur Abdichtung ein entsprechender Faltenbalg 55 vorgesehen ist. Diese Federbeinkolbenstange 50 greift in das Federbeinlager 38 ein und ist dort in einem doppelten Kegellager 51 geführt.

Der Faltenbalg 55 kann im übrigen auch oder nur durch einen gesonderten Luftfederbalg ersetzt werden, so daß eine unterschiedliche Tragfähigkeit erzielt wird.

In Fig. 6 ist im übrigen noch die Anlenkung des Dreiecklenkers 24 und 26 über das Gelenk 28 an der Bodenplatte 9 angedeutet.

## Patentansprüche

1. Einzelradaufhängung für ein Kraftfahrzeug, insbesondere einen Omnibus, bei der ein Fahrzeugrad (12, 13) an einem Radträger (17, 17a) höhenbeweglich und gegebenenfalls lenkbar in der Weise aufgehängt ist, daß der Radträger (17, 17a) über einen Querlenker (25), ein Federbein (35), bestehend aus einem Federbeinführungsrohr (49) und einer Federbeinkolbenstange (50), und einen separat angeordneten Stoßdämpfer (45) mit dem Fahrzeugrahmen (9, 43) verbunden ist, dadurch **gekennzeichnet,** daß mit dem Federbeinführungsrohr (49) des Federbeins (35) ein unterer Träger (36) für Luftfedern (37, 39, 40 bzw. 92) verbunden ist, wobei die Luftfedern (37, 39, 40 bzw. 92) - gesehen quer zur Fahrtrichtung - beidseits vom Federbein (35) angeordnet sind und sich an ihren oberen Enden am Radkastengehäuse (43) oder an einen oberen Träger (48), der mit der Federbeinkolbenstange (50) des Federbeins (35) und gegebenenfalls mit dem oberen Ende des Stoßdämpfers (45) verbunden ist, abstützen.

2. Einzelradaufhängung nach Anspruch 1, dadurch **gekennzeichnet,** daß mit dem Radträger (17, 17a) zumindest ein Stoßdämpfer (45) verbunden ist, welcher andererseits am Radkastengehäuse (43) oder am oberen Träger (48) angelenkt ist.

3. Einzelradaufhängung nach Anspruch 2, dadurch **gekennzeichnet,** daß der Radträger (17, 17a) zwei Anlenkstellen (44) zum Befestigen von Stoßdämpfern (45) aufweist.

4. Einzelradaufhängung nach Anspruch 2, dadurch **gekennzeichnet,** daß, gesehen in Fahrzeuglängsrichtung, die Längsachse (A) des Stoßdämpfers (45) mit der Längsachse (B) des Federbeins (35) einen Winkel (v) einschließt.

5. Einzelradaufhängung nach Anspruch 1, dadurch **gekennzeichnet,** daß der obere Träger (48) in einem Federbeinlager (38) abgestützt ist.

6. Einzelradaufhängung nach Anspruch 1, dadurch **gekennzeichnet,** daß jede Luftfeder (92) einen Federbalg (39) aufweist, welcher zwischen dem unteren Träger (36), einem Luftfederkolben (37) und dem Radkastengehäuse (43) angeordnet ist.

7. Einzelradaufhängung nach Anspruch 2, dadurch **gekennzeichnet,** daß am Radträger (17, 17a) beidseits eines Achszapfens (18) Befestigungsaugen (81) angegossen oder angeschmiedet sind, an welchen sich zwei Stoßdämpfer (45) abstützen, während sie am anderen Ende mit dem oberen Träger (48) verbunden sind.

8. Einzelradaufhängung nach Anspruch 7, dadurch **gekennzeichnet,** daß der Radträger (17a) zu einer Achse (C) in Bezug auf die Anlenkung der Stoßdämpfer (45) und eine Spurstange (32) spiegelsymmetrisch ausgebildet ist.

9. Einzelradaufhängung nach Anspruch 8, dadurch **gekennzeichnet,** daß der Radträger (17a) als einstückiges Guß- oder Schmiedeteil hergestellt ist.

10. Einzelradaufhängung nach den Ansprüche 1 und 2 dadurch **gekennzeichnet,** daß die Längsachse (A) des Stoßdämpfers (45) gegenüber der Längsachse (B) des Federbeins (35) in Richtung zur Bereifung (12) versetzt angeordnet ist.

## Claims

1. A single-wheel suspension for a motor vehicle, more particularly a bus, in which a vehicle wheel (12, 13) is suspended from a wheel support (17, 17a) so as to be vertically displaceable and optionally steerable in such a manner that the wheel support (17, 17a) is connected with the vehicle chassis (9, 43) via a transverse link (25), a spring leg (35), comprising a spring leg guide tube (49) and a spring leg piston rod (50), and a separately arranged shock absorber (45), characterised in that a lower support (36) for air springs (37, 39, 40 or 92) is connected with the spring leg guide tube (49) of the spring leg (35), the air springs (37, 39, 40 or 92) being arranged on either side of the spring leg (35) - viewed transverse to the direction of travel - and are supported at their upper ends on the wheel box housing (43) or on an upper support (48), which is connected with the spring leg piston rod (50) of the spring leg (35) and optionally with the upper end of the shock absorber (45).

2. A single-wheel suspension according to claim 1, characterised in that a shock absorber (45) is connected with the wheel support (17, 17a) and is articulatedly connected at the other end with the wheel box housing (43) or upper support (48).

3. A single-wheel suspension according to claim 2, characterised in that the wheel support (17, 17a) comprises two articulation points (44) for securing shock absorbers (45).

4. A single-wheel suspension according to claim 2, characterised in that, viewed in the longitudinal direction of the vehicle, the longitudinal axis (A) of the shock absorber (45) forms an angle (v) with the longitudinal axis (B) of the spring leg (35).

5. A single-wheel suspension according to claim 1, characterised in that the upper support (48) is supported in a spring leg bearing (38).

6. A single-wheel suspension according to claim 1, characterised in that each air spring (92) comprises spring bellows (39), which are arranged between the lower support (36), an air spring piston (37) and the wheel box housing (43).

7. A single-wheel suspension according to claim 2, characterised in that securing eyelets (81) are arranged on or welded onto the wheel support (17, 17a) on either side of a king pin (18), two shock absorbers (45) being supported on said eyelets (81) and being connected at their other end with the upper support (48).

8. A single-wheel suspension according to claim 7, characterised in that the wheel support (17a) is mirror-symmetrical to an axis (C) in relation to the articulation of the shock absorbers (45) and a trackrod (32).

9. A single-wheel suspension according to claim 8, characterised in that the wheel support (17a) is manufactured as an integral cast or forged part.

10. A single-wheel suspension according to claims 1 and 2, characterised in that the longitudinal axis (A) of the shock absorber (45) is arranged offset in the direction of the tyre (12) relative to the longitudinal axis (B) of the spring leg (35).

## Revendications

1. Suspension indépendante pour un véhicule à moteur, notamment un autobus, dans laquelle une roue (12,13) du véhicule, portée par un support de roue (17, 17a), est suspendue de façon à être mobile en hauteur, et orientable le cas échéant, de telle manière que le support de roue (17, 17a) est relié au châssis (9, 43) du véhicule par un bras oscillant transversal (25), une jambe élastique (35) composée d'un tube de guidage (49) et d'une tige de piston (50), et un amortisseur (45) disposé à part, **caractérisée** en ce que le tube de guidage (49) de la jambe élastique (35) est lié à un support inférieur (36) de ressorts pneumatiques (37, 39, 40, 92), lesquels sont disposés - en vue transversale par rapport à la direction de marche - de part et d'autre de la jambe élastique (35) et s'appuient par leur extrémité supérieure contre le corps du passage de roue (43) ou contre un support supérieur (48) qui est lié à la tige de piston (50) de la jambe élastique et, le cas échéant, à l'extrémité supérieure de l'amortisseur (45).

2. Suspension indépendante selon la revendication 1, **caractérisée** en ce que le support de roue (17, 17a) est lié à au moins un amortisseur (45) qui est articulé d'autre part au corps du passage de roue (43) ou au support supérieur (48).

3. Suspension indépendante selon la revendication 2, **caractérisée** en ce que le support de roue (17, 17a) comporte deux points d'attache (44) pour la fixation d'amortisseurs (45).

4. Suspension indépendante selon la revendication 2, **caractérisée** en ce que, en vue dans la direction longitudinale du véhicule, l'axe (A) de l'amortisseur (45) forme un angle (v) avec l'axe (B) de la jambe élastique.

5. Suspension indépendante selon la revendication 1, **caractérisée** en ce que le support supérieur (48) s'appuie dans une monture de jambe élastique (38).

6. Suspension indépendante selon la revendication 1, **caractérisée** en ce que chaque ressort pneumatique (92) comporte un coussin pneumatique (39) disposé entre le support inférieur (36), un piston de coussin pneumatique (37) et le corps de passage de roue (43).

7. Suspension indépendante selon la revendication 2, **caractérisée** en ce que le support de roue (17, 17a) comporte, de part et d'autre d'une fusée (18), des oeillets de fixation (81) coulés ou soudés où s'appuient deux amortisseurs (45) dont l'autre extrémité est raccordée au support supérieur (48).

8. Suspension indépendante selon la revendication 7, **caractérisée** en ce que le support de roue (17a) a une forme symétrique par rapport à un axe (C) en ce qui concerne la fixation des amortisseurs (45) et une barre de connexion (32).

9. Suspension indépendante selon la revendication 8, **caractérisée** en ce que le support de roue (17a) est fait d'un élément en une seule pièce moulée ou forgée.

10. Suspension indépendante selon la revendication 1 ou 2, **caractérisée** en ce que l'axe (A) de l'amortisseur (45) est décalé en direction du pneu (12) par rapport à l'axe (B) de la jambe élastique (35).
